# EUROPÄISCHE PATENTSCHRIFT

(11) **EP 1 886 730 B1**
(45) Veröffentlichungstag und Bekanntmachung des Hinweises auf die Patenterteilung: **15.07.2009**
(21) Anmeldenummer: 06016258.3
(22) Anmeldetag: 03.08.2006
(51) Int. Cl.: B02C 18/30

(54) **Fleischwolf**
Meat mincing machine
Hachoir à viande

(43) Veröffentlichungstag der Anmeldung: 13.02.2008
(73) Patentinhaber: Albert Handtmann Maschinenfabrik GmbH & Co. KG, 88400 Biberach (DE)
(72) Erfinder: Schmid, Klaus, 88499 Daugendorf (DE); Reutter, Siegfried, 88436 Eberhardzell (DE); Baechtle, Manfred, 88433 Schemmerhofen (DE); Braig, Wolfgang, 88471 Laupheim (DE)
(74) Vertreter: Grünecker, Kinkeldey, Stockmair & Schwanhäusser Anwaltssozietät

(56) Entgegenhaltungen:
- EP-A1- 0 900 595
- DE-A1- 10 312 605
- US-A- 5 417 376

## Beschreibung

Die Erfindung betrifft einen Fleischwolf und ein Verfahren zum Zerkleinern von Lebensmitteln, insbesondere zur Erzeugung von Hackfleisch gemäß den Oberbegriffen der Ansprüche 1 und 21.

Ein solcher Fleischwolf und ein solches Verfahren sind bereits aus der Druckschrift DE 10312605 A1 bekannt. Diese Druckschrift beschreibt einen Fleischwolf zum Erzeugen von zerkleinerten Lebensmitteln mit mindestens einem Schneidemesser und einer nachgeordneten Lochscheibe sowie einer Separiereinrichtung. In der Druckschrift ist in einem Abförderrohr eine fremd angetriebene Austragsschnecke angeordnet. Diese Austragsschnecke dient dazu, unabhängig vom Staudruck eine qualitätsgerechte Zerkleinerung und Aussonderung der Rohstoffe zu ermöglichen. Die Schnecke weist einen Fremdantrieb auf. Dieser Fremdantrieb ist beispielsweise ein Pneumatikmotor, der die Regelung und Steuerung der Austragsschnecke ermöglicht, ohne in das Antriebssystem des Fleischwolfs einzugreifen.

Aus der Druckschrift EP-A1-0900595 ist ebenfalls bereits ein Trennschneidsatz für Maschinen zur Fleischzerkleinerung bekannt. Auch hier ist es bereits bekannt, harte und sehnige Schneidgutbestandteile im Trennschneidsatz quer zur Förderrichtung der Zerkleinerungsmaschine abzuleiten. Aus der US-A-5417376 ist ebenfalls bereits eine Vorrichtung bekannt, die das Aussondern von Knochen und anderen Hartbestandteilen aus zu verarbeitenden Lebensmitteln erlaubt.

Fleischwölfe werden in der Lebensmittelindustrie zum Zerkleinern von Lebensmitteln, insbesondere von Hackfleisch, verwendet. Dabei wird das Fleisch in einen Einfüllstutzen gegeben und durch eine Fördereinrichtung gegen ein mehrflügeliges Messer gedrückt. Das Messer zerschneidet das Fleisch, das anschließend durch eine Lochscheibe aus dem Fleischwolf herausgepresst wird. Es sind auch Schneidesätze mit mehreren Schneidemessern und mehreren Lochscheiben bekannt.

Unerwünschte, harte und feste Bestandteile des Fleischs, wie beispielsweise Sehnen, Flechsen, Schwarten, Knochensplitter, Bindegewebe, und mögliche fleischfremde Bestandteile, wie beispielsweise Metallteile, wie Clips, etc., können nicht ausreichend durch die Messer zerkleinert werden und somit nicht durch die Lochscheibe gedrückt werden. Aus diesem Grunde gibt es Fleischwölfe mit entsprechenden Separiereinrichtungen zum Abtrennen derartiger Hartbestandteile.

Grundsätzlich gibt es zwei Arten von Separier- und Trenneinrichtungen. Fleischwölfe mit Innenseparierung einerseits und Fleischwölfe mit Außenseparierung andererseits.

Alle diese Separiereinrichtungen haben den Nachteil, dass es aufgrund des separierten Materials zu Gewichtsungenauigkeiten der Portionen bei Füllwölfen kommt, bei denen das gewolfte Fleisch direkt aus dem Wolf in den Darm abgefüllt wird. Auch bei Wolfsystemen, mit denen Hackfleischportionen zum sofortigen Einlegen in Verpackungsmaschinen produziert werden, treten diese Gewichtsungenauigkeiten auf.

Es ist daher Aufgabe der vorliegenden Erfindung, einen Fleischwolf und ein Verfahren bereitzustellen, die es ermöglichen, Hartteile zu separieren und dennoch eine hohe Gewichtsgenauigkeit der hergestellten Portionen zu ermöglichen.

Erfindungsgemäß wird diese Aufgabe durch die Merkmale der Ansprüche 1 und 21 gelöst.

Dadurch, dass gemäß der Erfindung eine Einrichtung zum Bestimmen der abgeführten Menge an Hartbestandteilen, d.h. der Separiergutmenge vorgesehen ist, kann bestimmt werden, welche Menge, d. h. welches Volumen oder welche Masse, in einem bestimmten Zeitabschnitt nicht vom Fleischwolf als beispielsweise Hackfleisch ausgestoßen wird, sondern von der Separiereinrichtung abgetrennt und abgeführt wird. Die Bestimmung der Separiergutmenge oder des zeitlichen Verlaufs des separierten Guts ermöglicht korrigierend in den Produktionsprozess einzugreifen, und dieses fehlende Volumen, beispielsweise durch Erhöhen des Volumenstroms, der dem Fleischwolf zugeführt wird, zu kompensieren. Unter dem Begriff "Bestimmen" ist das mengenmäßige Erfassen, sei es durch Messen oder auch das gezielte Steuern der Separiergutmenge zu verstehen.

Da der erfindungsgemäße Fleischwolf weiter eine Steuereinrichtung umfasst, die veranlasst, dass in Abhängigkeit der bestimmten abgeführten Separiergutmenge den zu erzeugenden Portionen eine entsprechende Menge an zu zerkleinernden Lebensmitteln zusätzlich zugeführt wird. Somit kann sichergestellt werden, dass die erzeugten Portionen sehr gewichtsgenau produziert werden können.

Die Zugabe des separierten Volumens für den Gewichtsausgleich ermöglicht ein gewichtsgenaues Produzieren von Portionen. Somit ist es möglich, harte und feste Bestandteile, wie beispielsweise Sehnen, Flechsen, Schwarten, Knochensplitter, Bindegewebe, sowie fleischfremde Bestandteile, wie beispielsweise Metallteile und Clips, aus dem weicheren Fleisch zuverlässig zu entfernen. Das bedeutet, dass Gewichtsschwankungen ausgeglichen oder zumindest auf ein Minimum reduziert werden können.

Dabei umfasst der Fleischwolf ein Förderwerk oder ist mit einem Förderwerk, wie beispielsweise dem eines Füllwolfs, verbindbar. Das Förderwerk beschickt den Fleischwolf mit den zu zerkleinernden Lebensmitteln.

Gemäß einer bevorzugten Ausführungsform weist die Einrichtung zum Bestimmen der abgeführten Separiergutmenge eine Fördereinrichtung auf, die am Auslass oder in einer Abführleitung der Separiereinrichtung angeordnet ist. Die Fördereinrichtung kann beispielsweise motorisch antreibbar sein, wobei dann die Fördermenge der Fördereinrichtung der abgeführten Menge an Hartbestandteilen entspricht. Das bedeutet, dass beispielweise über den Drehwinkel der Fördereinrichtung und die Schluckmenge der Fördereinrichtung das separierte Volumen in einem bestimmten Zeitabschnitt ermittelt werden kann. Eine solche angetriebene Fördereinrichtung ermöglicht ein angetriebenes und gesteuertes Abführen des Separierguts, wodurch Blockaden und Verstopfungen verhindert werden.

Dabei kann die Fördermenge der Fördereinrichtung abhängig vom Durchsatz des Fleischwolfs eingestellt werden. Da dieser schwierig zu bestimmen ist, kann die Fördermenge der Fördereinrichtung auch in Abhängigkeit des Durchsatzes des Förderwerks eingestellt werden. Dabei kann der Antrieb der Fördereinrichtung mit dem Antrieb des Förderwerks vorzugsweise über ein Getriebe gekoppelt sein. Die Antriebe können auch getrennt sein. Bei getrennten Antrieben ist auch eine durchsatzunabhängige Separierung denkbar.

Diese aktive Vorrichtung lässt ein kontinuierliches Separieren zu, das letztendlich unabhängig von Druckschwankungen ist.

Gemäß einer weiteren Ausführungsform der vorliegenden Erfindung wird die Fördereinrichtung nicht extra motorisch angetrieben, sondern durch den Druck und die Bewegung der abgeführten Hartbestandteile angetrieben, wobei dann weiter eine Messeinrichtung vorgesehen sein kann, die über den Antrieb der Fördereinrichtung die Fördermenge bestimmt. Wie zuvor erwähnt, kann beispielsweise durch den Drehwinkel einer Pumpenwelle und die Schluckmenge einer Pumpe das separierte Volumen bestimmt werden.

Vorzugsweise umfasst die Fördereinrichtung eine gesteuerte Bremse, durch die das Förderwerk, d.h., die Pumpe gesteuert gebremst werden kann, damit aufgrund des separierten Volumens die ggf. dem Fleischwolf zusätzlich zugeführte Menge nicht derart erhöht wird, dass wiederum mehr separiert wird und sich die Regelung unkontrolliert hochschaukelt.

Die Einrichtung zum Bestimmen der abgeführten Separiergutmenge kann jedoch auch einen Durchflussmesser umfassen oder aber auch ein kontinuierlich arbeitendes Wägesystem.

Es wird vorteilhaft, wenn die Einrichtung zur Bestimmung der Separiergutmenge eine Steuereinrichtung umfasst, die die Fördereinrichtung oder die gesteuerte Bremse ansteuert, um in Abhängigkeit der Güte des zu zerkleinernden Lebensmittels eine festgelegte Separiergutmenge gesteuert abzuführen. Da das Ausgangsmaterial den Fleisch verarbeitenden Betrieben in der Regel zugeschnitten und in definierten Güteklassen angeliefert wird, kann eine bestimmte Separiergutmenge bzw. -anteil (z.B. zwischen 3 und 10%) des zu zerkleinernden Fleisches festgelegt werden, wobei die Fördereinrichtung die entsprechende Separiergutmenge abführt.

Vorzugsweise bestimmt die Einrichtung zum Bestimmen der Separiergutmenge das Volumen des Separierguts.

Vorzugsweise umfasst der Fleischwolf mindestens einen Sensor, der in Abhängigkeit der Zusammensetzung des Separierguts oder des zerkleinerten Lebensmittels ein Signal an eine Steuerung abgibt, die die Fördereinrichtung oder die gesteuerte Bremse in Abhängigkeit des Signals ansteuert. Vorzugsweise ist der Sensor ein Farbsensor, der insbesondere den Rot- bzw. Weißanteil des Separierguts oder des zerkleinerten Lebensmittels bestimmt. Die Einstellung der Separiergutmenge erfolgt auf der Basis der Farbe des Separierguts. Bei hohem Rotanteil des Separierguts enthält es zuviel wertvolles Muskelfleisch, d.h., es wird zuviel separiert. Ist das Separiergut nur weiß besteht die Gefahr, dass zu wenig Hartteile separiert werden und beispielsweise zuviel Bindegewebe in die Fertigportionen ausgestoßen wird oder die Endlochscheibe verstopft. Es ist also darauf zu achten, dass ein gewisser Fleischanteil im Separiergut enthalten ist, der an dessen Farbe zu erkennen ist. Die Sensoren ermöglichen, dass die Fördereinrichtung eine angemessene Menge an Separiergut abfördert.

Dabei können die Sensoren am Auslauf der Separiereinrichtung und/oder am Auslauf des Fleischwolfs und/oder im Bereich der Separiervorrichtung vorgesehen sein.

Vorteilhafterweise ist der Fleischwolf derart ausgebildet, dass die Steuereinrichtung derart das Förderwerk ansteuert, dass die Förderleistung so erhöht wird, dass die bestimmte Menge an Separiergut kompensiert wird.

Gemäß der vorliegenden Erfindung kann die abgeführte Separiergutmenge , beispielsweise in Form des Volumens oder der Masse bestimmt werden und/oder der zeitliche Verlauf der abgeführten Separiergutmenge an Hartbestandteilen, d. h. die Masse oder das Volumen pro Zeit.

Das erfindungsgemäße Verfahren ermöglicht es, die abgeführte Menge kontinuierlich während des Verfahrens zu bestimmen, so dass jederzeit und ohne zeitliche Verzögerung korrigierend auf den Prozess eingewirkt werden kann.

Die vorliegende Erfindung wird nachfolgend unter Bezugnahme der in den Figuren näher erläutert. Dabei zeigt
- Fig. 1: einen Schnitt durch einen Fleischwolf mit Förderwerk gemäß der vorliegenden Erfindung,
- Fig. 2: einen Füllwolf, der einen Fleischwolf gemäß der vorliegenden Erfindung umfasst,
- Fig. 3: ein Beispiel für eine Separiereinrichtung,
- Fig. 4: ein Beispiel für eine Separiereinrichtung,
- Fig. 5: einen Schneidesatz für einen Fleischwolf mit Außenseparierung,
- Fig. 6: ein Ablaufdiagramm des erfindungsgemäßen Verfahrens.
- Fig. 7: eine weitere Ausführungsform der vorliegenden Erfindung, die einen Farbsensor umfasst.
- Fig. 8: ein stark vereinfachtes Blockschaltbild der Steuerungseinrichtung gemäß einer Ausführungsform der Erfindung.

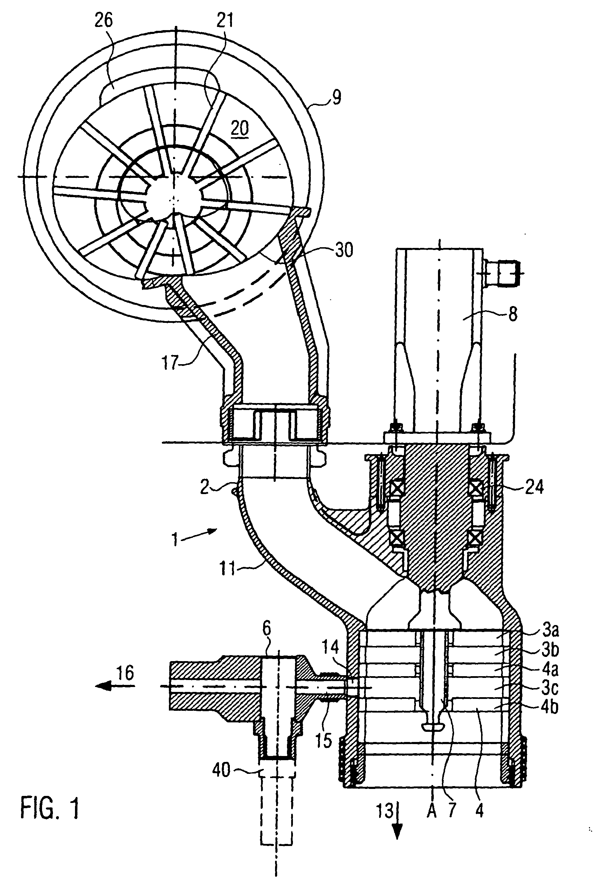

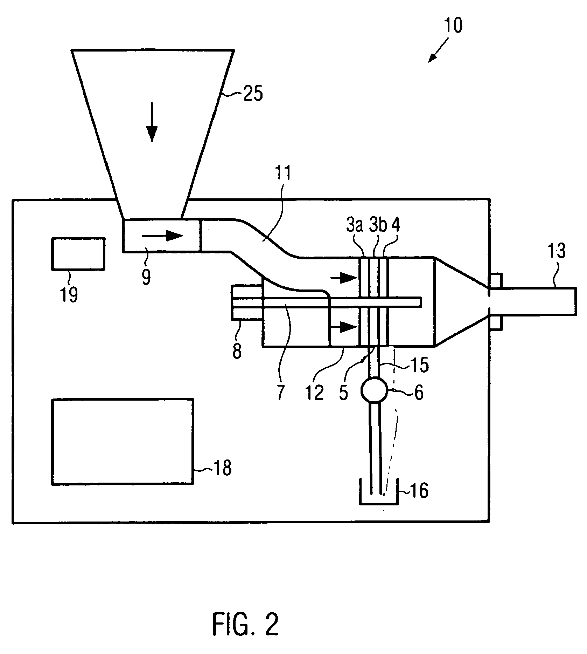

Fig. 1 zeigt einen Querschnitt durch eine mögliche Ausführungsform eines Fleischwolfs 1 gemäß der vorliegenden Erfindung. Fig. 2 zeigt schematisch einen Längsschnitt durch den Füllwolf 10, der einen erfindungsgemäßen Fleischwolf 1 umfasst.

Wie aus Fig. 2 hervorgeht, ist hier der Fleischwolf 1 in einen Füllwolf 10 integriert. Mit dem Bezugszeichen 25 ist ein Einfülltrichter bezeichnet, über den grob zerkleinerte Lebensmittel, hier grob zerkleinertes Fleisch, dem Fleischwolf 1 zugegeben wird. Im Anschluss an den Einfülltrichter 25 ist ein Förderwerk 9 vorgesehen, beispielsweise die in Fig. 1 gezeigte Flügelzellenpumpe 9, die das zu zerkleinernde Fleisch mit einer bestimmten Förderleistung, d. h. einem bestimmten Volumenstrom, zu dem Schneidesatz 3, 4 hin fördert. Anstelle der Flügelzellenpumpe 9 können selbstverständlich auch andere Pumpen, Förderschnecken, etc., verwendet werden. Die in Fig. 1 gezeigte Flügelzellenpumpe ist bereits aus dem Stand der Technik bekannt (beispielsweise aus der EP 04 323 88 B2 und EP 10 407 58 A1) und wird nicht näher erläutert. Die Flügelzellenpumpe weist hier einen Einlass 26 für das grob zerkleinerte Fleisch auf, sowie radial verschiebbare Flügel 21, die sich in Pfeilrichtung P drehen, wobei das Fleisch über die Zuführung 26 in die Kammern 20 der Flügelzellenpumpe 9 gelangt und in Richtung Pumpenauslass 30, der in den Stutzen 17 mündet, ausgestoßen wird. Somit wird das Fleisch in Richtung Einlass 2 des Fleischwolfs 1 geschoben. Die Verbindungsleitung 11 führt zu dem nachfolgend angeordneten Schneidesatz. Bekannterweise umfasst der Schneidesatz mindestens einen feststehenden Vorschneider 3a, ein Schneidemesser 3b sowie mindestens eine nachgeordnete feststehende Lochscheibe 4. In diesem Ausführungsbeispiel zeigt der Schneidesatz z. B. ein Vorschneidemesser mit Gleitlager 3a, ein über die Welle 7 angetriebenes Schneidemesser 3b, eine feststehende Lochscheibe 4a, ein von der Welle 7 angetriebenes Hohlarmmesser 3c, sowie eine feststehende Feinlochscheibe 4b. Die Feinlochscheiben haben runden Querschnitt, ebenso wie der Innenraum des Gehäuses 12 in diesem Bereich.

Die Separierung erfolgt vorzugsweise vor der Feinlochscheibe 4b, kann aber auch vor jeder anderen Lochscheibe erfolgen.

Zum Antrieb der Welle 7 ist ein Elektromotor 8 vorgesehen, der die Welle 7 um die Achse A dreht, wodurch die auf der Welle 7 gelagerten Messer 3b, 3c um die Achse A gedreht werden. Der Motor 8 ist an dem Gehäuse 12 des Fleischwolfs angeordnet, wobei die Antriebswelle über entsprechende Lager 24 drehbar im Gehäuse gelagert ist.

Erfindungsgemäß weist der Fleischwolf 1, wie am besten aus Fig. 1 ersichtlich ist, eine Einrichtung 5 auf, die ermöglicht, dass Hartbestandteile, die im Fleisch enthalten sind, abgetrennt und abgeführt werden können. Solche Hartbestandteile können nicht durch das Schneidemesser in ausreichender Weise zerkleinert und durch die Lochscheibe 4b, die eine Feinlochscheibe ist, durchgedrückt werden. Solche Hartbestandteile sind beispielsweise Sehnen, Flechsen, Schwarten, Knochensplitter, Bindegewebe und mögliche fleischfremde Bestandteile, wie z. B. Metallteile, Clips, etc.

Grundsätzlich gibt es zwei Arten von Separier- und Trenneinrichtungen:
einerseits gibt es Fleischwölfe mit Innenseparierung und andererseits gibt es Fleischwölfe mit Außenseparierung.

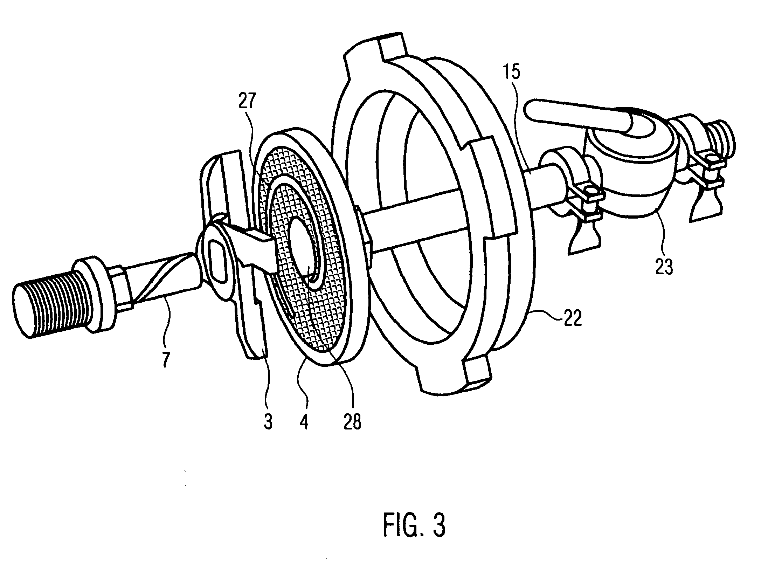

Fig. 3 zeigt ein Beispiel für die Innenseparierung. Der Einfachheit halber ist nur ein Schneidemesser 3 und eine Endlochscheibe 4 gezeigt. Mit 22 ist ein Überwurf bezeichnet, der am Gehäuse des Fleischwolfs zu befestigen ist. In der Endlochscheibe 4 sind spiral- oder sternförmige Nuten 27 vorgesehen, die zu einer mittigen Aussparung 28 führen, die wiederum mit der Ableitung 15 verbunden ist. Die spiral- oder sternförmigen Nuten dienen zur Förderung der Hartteile zur Mitte und zum Messerzapfen 7. Beim Drehen des Schneidemessers haben die Hartbestandteile, die größer sind als die Löcher der nachfolgenden Lochscheibe 4, das Bestreben, sich zum Zentrum der Lochscheibe, d. h. zu der Aussparung 28, zu bewegen. Diese Hartbestandteile können sich in den Spiralnuten nach innen bewegen. Hier hat der Messerzapfen 7 bzw. die Welle, die das Separiermesser 3 antreibt, beispielsweise einen spiralförmigen Förderkanal, der sich nach vorne zur Ableitung 15 erstreckt, und der somit das Austragen der zum Zentrum geförderten unerwünschten Bestandteile übernimmt. Die Hartbestandteile werden dann über die Leitung 15 ausgetragen. In der Leitung 15 kann ein Absperrventil 23 oder Drosselventil vorgesehen sein.

Alternativ oder zusätzlich können die Hartbestandteile durch ein mehrflügeliges Separiermesser mit nach innen gerichteten Schneiden zum Zentrum hin gefördert werden.

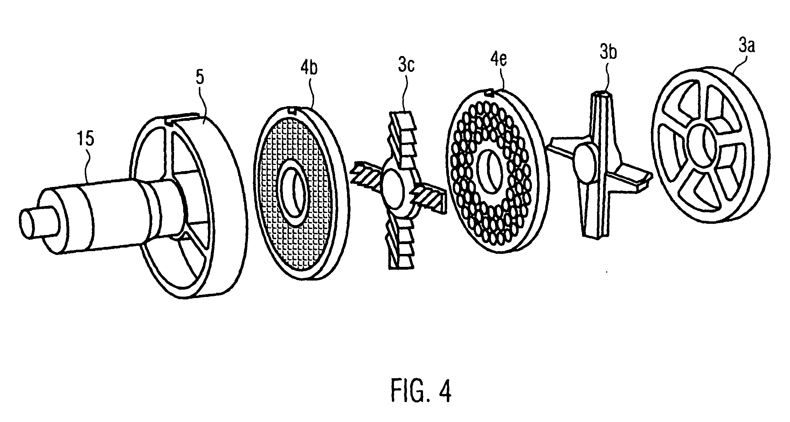

In Fig. 4 ist beispielsweise ein Messersatz gezeigt, der ein solches Separiermesser 3c zeigt. Der Schneidesatz, der in Fig. 4 gezeigt ist, umfasst einen Vorschneider mit Gleitlager 3a, ein Kreuzmesser mit vier Flügeln 3b, eine Groblochscheibe 4a, ein Separiermesser 3c mit nach innen gerichteten Schneiden. Die Schneiden des Separiermessers 3c zeigen zur Feinlochscheibe 4b und verlaufen schräg zur Mittelachse A. Durch die nach innen gerichteten Schneiden werden die Hartbestandteile zum Zentrum hin gelenkt und können dann, wie aus Fig. 4 ersichtlich ist, durch den Druck im Fleischwolf aus dem Fleischwolf über die Ableitung 15 abgeleitet werden.

Selbstverständlich ist es auch möglich, die spiral- oder sternförmigen Nuten in der Lochscheibe 4 mit einem mehrflügeligen Separiermesser mit nach innen gerichteten Schneiden zu kombinieren.

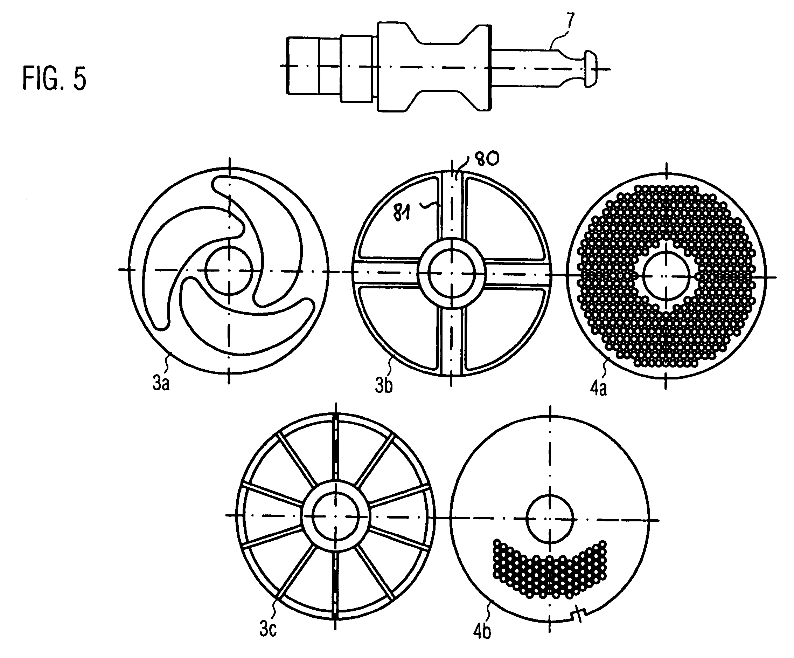

Wie erwähnt gibt es des Weiteren Fleischwölfe mit Außenseparierung. Dabei hat das Separiermesser 3b beispielsweise hohle Messerarme 81. Ein solcher Schneidesatz ist in Fig. 5 gezeigt und umfasst beispielsweise den Vorschneider 3a, das Hohlarmmesser 3b, die Feinlochscheibe 4a, das weitere Schneidemesser 3c sowie eine Endlochscheibe 4b, bei der in diesem Ausführungsbeispiel nur ein Teilbereich als Lochfeld ausgebildet ist. Das Separiermesser, z. B., weist hier mehrere sich radial erstreckende Hohlräume 80 auf, die nach außen geöffnet sind und seitlich jeweils durch zwei Schneiden begrenzt sind. Die Hohlräume sind zur Lochscheibe 4a gerichtet. Bei dem Hohlarmsepariermesser 3b sammeln sich die Hartteile am Innendurchmesser und werden in Folge des Brätdrucks durch die Hohlarme nach außen geführt. Im Gehäuse 12 ist eine entsprechende Öffnung 14 vorgesehen, durch die die Hartbestandteile, die durch die Hohlarme nach außen getrieben werden, ausgestoßen und in eine Ableitung 15 abgeführt werden.

In Fig. 1 ist eine Separiereinrichtung gezeigt, die hier ein Hohlarmmesser 3c, wie es in Fig. 5 gezeigt ist, umfasst, wobei in dem Gehäuse 12 des Fleischwolfs die Öffnung 14 angeordnet ist, die wiederum mit der Ableitung 15 verbunden ist, um die Hartbestandteile abzuführen.

Der Massestrom wird beim Separieren aufgeteilt in einen Strom, der durch die Öffnungen der feststehenden Endlochscheibe 4b geleitet wird und einem kleinen Teilstrom, der durch die Separiereinrichtung abgetrennt und über die Leitung 15 ausgeleitet wird. Wie in Fig. 2 gezeigt ist, kann die Hartbestandteilmenge beispielsweise in einer dafür vorgesehenen Behälter 16 geleitet werden.

Gemäß der vorliegenden Erfindung umfasst der Fleischwolf eine Einrichtung 6, 19, 40 zum Bestimmen der abgeführten Menge an Hartbestandteilen bzw. der Separiergutmenge. Unter "Menge" ist beispielsweise das Volumen oder die Masse zu verstehen. Die Einrichtung 6, 19, 40 erfasst dabei die in einem bestimmten Zeitintervall Δt abgeführte Menge an Hartbestandteilen bzw. Separiergut, oder den zeitlichen Verlauf der abgeführten Menge oder aber beispielsweise die abgeführte Menge an Hartbestandteilen, die beim Zerkleinern einer bestimmten Fleischmenge angefallen ist. Somit kann der Nachteil der bisher üblichen unkontrollierten Separierung kompensiert werden. Dadurch, dass die abgeführte Menge an Hartbestandteilen bestimmt werden kann, kann ein entsprechendes Volumen den herzustellenden Portionen zugegeben werden, um somit die Gewichtsschwankungen auszugleichen oder auf ein Minimum zu reduzieren, die durch das Ableiten der Hartbestandteile auftreten würden.

Die Einrichtung 6, 19,40 zum Bestimmen der abgeführten Menge an Hartbestandteilen kann eine Fördereinrichtung 6 umfassen, die am Auslass 14 oder in der Abführleitung 15 der Separiereinrichtung 5 angeordnet ist sowie eine Steuereinrichtung 19 zum Berechnen der Menge. Eine solche Fördereinrichtung kann beispielsweise eine Zahnrad oder Flügelzellenpumpe, jedoch auch eine Kolbenpumpe oder Schneckenpumpe etc., sein.

Hier kann zwischen einer aktiven und einer passiven Einrichtung unterschieden werden. Zunächst wird die aktive Einrichtung 6, 19, 40 beschrieben. Hier wird die Fördereinrichtung 6 motorisch angetrieben. Über den Antrieb der Fördereinrichtung 6 z. B. der Pumpe, kann das separierte Volumen bestimmt werden. Dies erfolgt beispielsweise über den Drehwinkel der Pumpwelle und die Schluckmenge der Pumpe. Das Separieren kann hierbei abhängig vom Durchsatz des Fleischwolfs erfolgen. Da dieser Durchsatz jedoch schwierig zu erfassen ist, erfolgt die Separierung in Abhängigkeit des Durchsatzes des Förderwerks 9, hier der Flügelzellenpumpe 9, die den Fleischwolf 1 beschickt und deren Durchsatz sehr genau bestimmt werden kann.

Hierzu ist eine direkte Kopplung zwischen dem Antrieb des Förderwerks 9 des Füllwolfs und dem Antrieb der Fördereinrichtung 6, beispielsweise mittels Getriebe, denkbar. Bei getrennten Antrieben ist aber auch ein Durchsatz unabhängiges Separieren denkbar. Diese aktive Vorrichtung lässt ein kontinuierliches Separieren zu, das letztendlich unabhängig von Druckschwankungen ist. Blockaden und Verstopfungen der Separiereinrichtung 5 sind durch das angetriebene und gesteuerte Abführen des Separierguts ausgeschlossen.

Bei der passiven Vorrichtung wird die Fördereinrichtung 6 durch den Druck und die Bewegung der abgeführten Menge an Hartbestandteilen angetrieben. Hier kann, wie in Zusammenhang mit der aktiven Vorrichtung beschrieben, ebenfalls eine Pumpe, beispielsweise eine Zahnrad- oder Flügelzellenpumpe oder aber auch Kolbenpumpe oder Schneckenpumpe, verwendet werden. Zusätzlich ist eine Messeinrichtung, durch die gestrichelte Linie 40 dargestellt, vorgesehen, die die Menge an abgeführten Hartbestandteilen bestimmt. Eine solche Messeinrichtung bestimmt beispielsweise wieder den Drehwinkel einer Pumpenwelle, wodurch auf einfache Art und Weise über die Schluckmenge der Pumpe der Durchsatz in einer bestimmten Zeit berechnet werden kann. Bei der passiv angetriebenen Ausführung kann die Fördereinrichtung gesteuert gebremst werden, wozu eine entsprechende nicht dargestellte Bremse vorgesehen ist, um den Durchsatz durch die Fördereinrichtung 6 herabzusetzen. Dies erfolgt, damit aufgrund des separierten Volumens die dem Fleischwolf zusätzlich zugeführte Menge an Fleisch nicht derart erhöht wird, dass wiederum mehr separiert wird und sich die Regelung unkontrolliert nach oben schaukelt. Die Bremse kann von der Steuerung 19 angesteuert werden.

Eine weitere Variante der passiven Vorrichtung ist z. B. ein Durchflussmesssystem 40, das den Durchfluss des Separierguts bestimmt, wobei dem Durchflussmesssystem ein Drosselventil vor- oder nachgeschaltet sein kann. Das Drosselventil kann ebenfalls von der Steuereinrichtung 19 angesteuert werden. Eine weitere Möglichkeit besteht darin, ein kontinuierlich arbeitendes Wägesystem zur Ermittlung der abgeführten Menge an Hartbestandteilen zu verwenden.

Es ist auch möglich, am Auslass 14 oder der Ablassleitung 15 einen Behälter 16 mit vorbestimmten Volumen vorzusehen, der in einer bestimmten Zeit voll läuft, so dass das abgeführte Volumen in einer bestimmten Zeit bestimmt werden kann. Der Behälter kann dann in regelmäßigen Zeitabständen entleert werden.

Unabhängig davon, ob eine aktive oder passive Vorrichtung verwendet wird, ist wesentlich, dass die abgeführte Menge an Hartbestandteilen bestimmt werden kann, die pro Zeit abgeführt wird, oder die für eine bestimmte Menge an zu zerkleinerndem Fleisch abgeführt wird.

Das Fleisch, das nicht durch die Separiereinrichtung 5 in die Abführleitung 15 abgeführt wird, wird dann in bekannter Weise durch die Öffnungen der Endlochscheibe 4 gedrückt und wird beispielsweise in ein Füllrohr 13 (siehe Fig. 2) zum Befüllen von Wursthüllen portionsweise ausgestoßen. Das zerkleinerte Lebensmittel kann nach dem Ausstoßen durch die Endlochscheibe 4 auch in Einzelportionen, beispielsweise Hackfleischeinzelportionen, unterteilt werden.

Jedoch fehlt beim Herstellen dieser Portionen die Menge an abgeführten Hartbestandteilen. Deswegen wird den herzustellenden Portionen zu wenig zerkleinertes Lebensmittel bzw. Hackfleisch zugeführt, so dass es zu Gewichtsschwankungen der Einzelportionen kommt.

Da gemäß der vorliegenden Erfindung jedoch die Einrichtung 6 zum Bestimmen der abgeführten Menge an Hartbestandteilen bzw. der Separiergutmenge vorgesehen ist, kann diese fehlende Menge bzw. dieses fehlende Volumen den Portionen zugegeben werden, um somit die Gewichtsschwankungen auszugleichen und auf ein Minimum zu reduzieren.

Hierzu ist beispielsweise eine Steuereinrichtung 19 vorgesehen, in die ein Signal geleitet wird, das der abgeführten Menge an Hartbestandteilen entspricht. Dieses Signal wird beispielsweise von der Einrichtung 6 zum Bestimmen der abgeführten Menge an Hartbestandteile an die Steuerung 19 geleitet. Die Steuerung 19 steuert dann beispielsweise das Förderwerk 9 so an, dass in Abhängigkeit der bestimmten abgeführten Hartbestandteilmenge den zu erzeugenden Portionen eine entsprechende Menge an zu zerkleinernden Lebensmitteln zusätzlich zugeführt wird. Das Förderwerk 9 wird so angesteuert, dass die Förderleistung so erhöht wird, dass die bestimmte Menge der abgeführten Hartbestandteile kompensiert wird, d. h., das abgeführte Volumen zusätzlich durch Erhöhung der Förderleistung zugeführt wird.

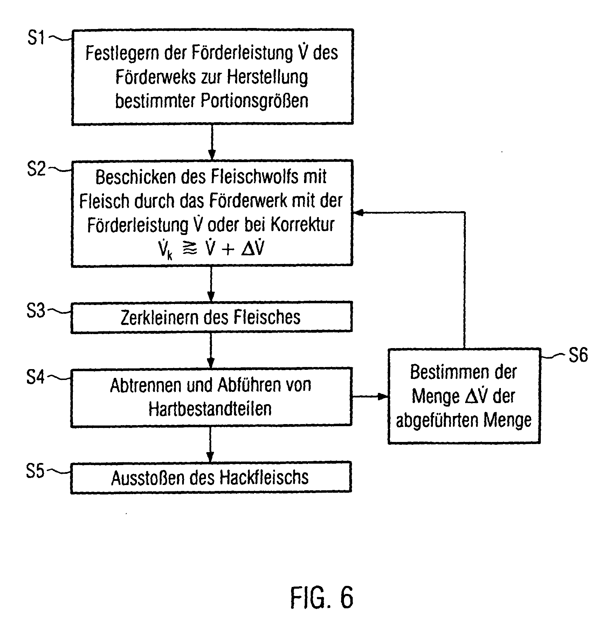

Fig. 6 zeigt ein Flussdiagramm, das das erfindungsgemäße Verfahren näher erläutert. Zunächst wird eine bestimmte Förderleistung, d. h., ein bestimmter Volumenstrom V des Förderwerks zur Herstellung bestimmter Portionsgrößen (d. h. zur Herstellung von unterteilten Einzelportionen mit bestimmter Masse) festgelegt (Schritt S1). Diese Größe kann in die Steuereinrichtung 19 eingegeben werden, die das Förderwerk 9 ansteuert, so dass das zuvor grob zerkleinerte Fleisch, das beispielsweise über den Trichter 25 zugegeben wurde, durch das Förderwerk mit der bestimmten Förderleistung V, gefördert wird (Schritt S2).

Das Fleisch wird dann über die Zuleitung 11 zu dem entsprechenden Schneidesatz mit den unterschiedlichen Schneidemessern 3 und Lochscheiben 4 gefördert. Hier wird das Fleisch beispielsweise durch die Vorschneidemesser 3a, b weiter zerkleinert, durch die Groblochscheibe 4a gedrückt und weiter durch das Separiermesser 3c zerkleinert (Schritt S3).

In diesem Ausführungsbeispiel umfasst die Separiereinrichtung 5 beispielsweise, wie zuvor erläutert, das Hohlarmmesser 3c, das die Hartbestandteile, die nicht durch die Endlochscheibe 4 gedrückt werden können, durch den Auslass 14 in die Abführleitung 15 führt, so dass die Hartbestandteile abgetrennt und abgeführt werden (Schritt S4) während das zerkleinerte Hackfleisch durch die Endlochscheibe 4 ausgestoßen wird (Schritt S5). Dem Volumenstrom, der durch die Endlochscheibe 4 ausgestoßen wird, fehlt jedoch das Volumen Δ*V̇*, an Hartbestandteilen, das von der Separiereinrichtung 5 abgetrennt und abgeführt wurde.

In dem Schritt S6 wird die Menge Δ*V̇* der abgeführten Menge an Hartbestandteilen, wie zuvor beschrieben, durch die aktive oder passive Einrichtung 6 bestimmt, d.h. also durch gezielte Ansteuerung der Fördereinrichtung 6 oder durch Messen der Separiergutmenge. Ein entsprechendes Signal wird an die Steuereinrichtung 19 gegeben, die dann wiederum den Volumenstrom V̇, mit dem der Fleischwolf 1 beschickt wird, so erhöht, dass der Volumenstrom ΔV̇ der in Schritt S4 abgeführt wird, kompensiert wird. Das bedeutet, dass bei einer Korrektur des Produktionsprozesses das Förderwerk 9 die Förderleistung auf etwa Vₖ > ~ V̇ + ΔV̇ erhöht. Die zur Kompensation des separierten Volumens Δ*V̇* zusätzlich zuzuführende Menge muss etwas größer sein als das separierte Volumen, da von dem Kompensationsvolumen ebenfalls wieder ein bestimmter prozentualer Anteil separiert wird.

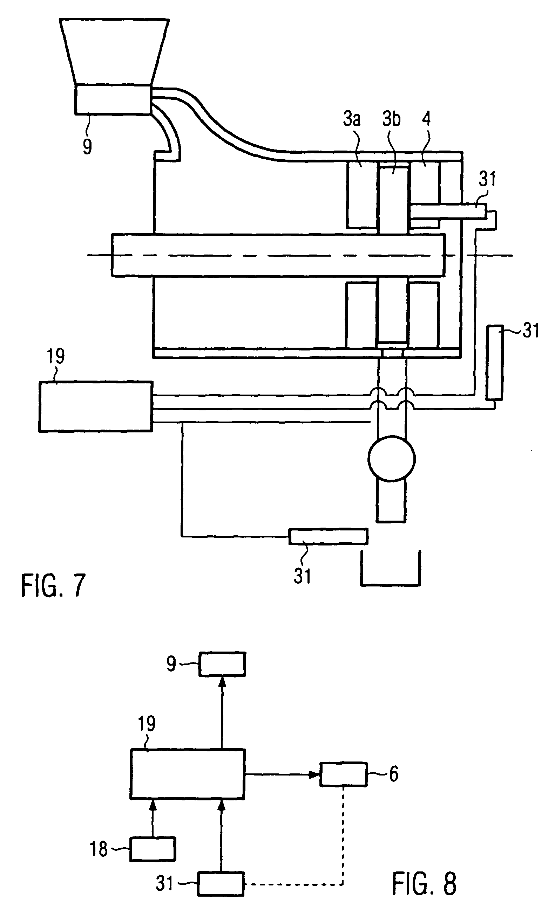

Bei der aktiven Einrichtung 6 wird gemäß der bevorzugten Ausführungsform die Menge des Separierguts in Abhängigkeit der Güte des zu zerkleinernden Lebensmittels von vornherein festgelegt und gesteuert abgeführt, so dass die Separiergutmenge mengenmäßig erfasst werden kann. Das Ausgangsmaterial wird den Fleisch verarbeitenden Betrieben in der Regel zugeschnitten und in definierten Güteklassen angeliefert. In Abhängigkeit der Güteklasse wird dann festgelegt, wie viel Prozent, z.B. zwischen 3 und 5% über die Fördereinrichtung 6 vom Gesamtstrom abgeführt wird. Dabei wird die Fördermenge der Fördereinrichtung 6 z.B. in Abhängigkeit des Durchsatzes des Förderwerks 9 eingestellt. Die vorab eingestellte Separiergutmenge muss jedoch noch optimiert werden. Die Einstellung der Separiergutmenge erfolgt auf der Basis der Farbe des Separierguts. Bei hohem Rotanteil des Separierguts enthält es zuviel wertvolles Muskelfleisch, d.h., es wird zuviel separiert, so dass die Förderleistung der Fördereinrichtung 6 zu hoch ist. Ist das Separiergut nur weiß, besteht die Gefahr, dass zu wenig Hartteile separiert werden und beispielsweise zuviel Bindegewebe in die Fertigportionen ausgestoßen wird, oder die Endlochscheibe 4 verstopft. Es ist also darauf zu achten, dass ein gewisser Fleischanteil, also Rotanteil im Separiergut enthalten ist, der an dessen Farbe zu erkennen ist. Die vorzunehmende Einstellung kann durch einen oder mehrere Sensoren, insbesondere optische Farbsensoren, realisiert bzw. automatisiert werden. Wie aus Figur 7 hervorgeht, ist zumindest ein Farbsensor 31 vorgesehen. In Figur 7 sind drei Sensoren 31 vorgesehen. Die Farbsensoren können, wie aus Figur 7 hervorgeht, entweder am Auslauf des Separators 5 und/oder am Auslauf des Fleischwolfs und/oder im Bereich der Separiereinrichtung 5 vorgesehen sein. In der Separiereinrichtung 5 kann der Sensor 31, beispielsweise im Bereich des Hohlarmmessers 3b und der Lochscheibe 4, wo sich die Hartteile ansammeln, bevor sie in die radialen Kanäle des Hohlarmmessers 3b gedrückt werden, angeordnet sein.

Die Farbsensoren 31 geben ein entsprechendes Signal an die Steuerung 19, wie auch aus Figur 8 ersichtlich ist.

Wie aus dem in Figur 8 gezeigten Blockschaltbild hervorgeht, wird die Fördereinrichtung 6 von der Steuerung 19 angesteuert, um eine bestimmte Separiergutmenge gesteuert abzuführen. Aufgrund der Güte des Ausgangsmaterials wird die Separiergutmenge festgelegt, d.h. beispielsweise wie viel Prozent des zu zerkleinernden Fleisches separiert werden sollen. Dieser Wert wird z. B. über eine Eingabeeinrichtung 18 in die Steuerung 19 eingegeben. Weiter wird, wie zuvor beschrieben, auch die Fördermenge V für das Förderwerk 9 festgelegt, wobei dann die Steuereinrichtung 19 die Fördermenge der Fördereinrichtung 6 in Abhängigkeit der Förderleistung des Förderwerks 9 sowie des vorab festgelegten Separiergutanteils ermittelt und die Fördereinrichtung 6 entsprechend ansteuert. Der mindestens eine Farbsensor 31 ermittelt dann den Rot- oder Weißanteil des Separierguts und/oder des Hackfleisches und übermittelt ein entsprechendes Signal an die Steuereinrichtung 19, die dieses Signal mit einem Sollwert oder Sollwertbereich vergleicht. Weicht der ermittelte Wert von einem Sollwert ab, wobei beispielsweise der Rotanteil des Separierguts zu hoch ist, so wird die Förderleistung der Fördereinrichtung 6 herabgesetzt. Bei zu geringem Rotanteil erhöht die Steuereinrichtung 19 die Förderleistung der Fördereinrichtung 6. Die Separiergutmenge kann somit ideal eingestellt werden. Wie auch im Zusammenhang mit Figur 6 erläutert, wird entsprechend der bestimmten Separiergutmenge dann auch die Förderleistung des Förderwerks 9 zur Kompensation der abgeführten Separiergutmenge angepasst.

Durch die Zugabe des separierten Volumens für den Gewichtsausgleich kann ein gewichtsgenaues Produzieren ermöglicht werden. Ein kontrolliertes und druckunabhängiges Separieren ist möglich. Dadurch, dass die abgeführte Hartbestandteilmenge kontinuierlich bestimmt werden kann, kann jederzeit und ohne zeitliche Verzögerung korrigierend in den Produktionsprozess eingegriffen werden.

Bei dem in Fig. 6 gezeigten Beispiel wurde die abgeführte Menge als Änderung des Volumens pro Zeit ermittelt. Es ist jedoch auch möglich, die abgeführte Menge an Hartbestandteilen für eine bestimmte Menge an zu zerkleinernden Lebensmitteln zu bestimmen und die Förderleistung des Förderwerks dann entsprechend anzupassen.

Auch wenn die vorherigen Ausführungsformen im Zusammenhang mit Fleisch beschrieben wurden, ist die vorliegende Erfindung keinesfalls auf die Verarbeitung von Fleisch beschränkt, sondern kann ebenso zum Zerkleinern von anderen Lebensmitteln verwendet werden, die Hartbestandteile aufweisen, die nicht ausreichend zerkleinert werden können.

## Patentansprüche

1. Fleischwolf (1) zum Erzeugen von zerkleinerten Lebensmitteln, insbesondere von Hackfleisch, mit einem Einlass (2), mindestens einem Schneidemesser (3) und mindestens einer nachgeordneten Lochscheibe (4), sowie mit einer Separiereinrichtung (5) zum Abtrennen und Abführen von Hartbestandteilen mit
einer Einrichtung (6, 19, 40) zum Bestimmen der von der Separiereinrichtung (5) abgeführten Separiergutmenge, **dadurch gekennzeichnet, dass**
der Fleischwolf (1) weiter eine Steuereinrichtung (19) umfasst, die veranlasst, dass in Abhängigkeit der bestimmten von der Separiereinrichtung abgeführten Menge den zu erzeugenden Portionen mindestens eine entsprechende Menge an zerkleinerten Lebensmitteln zusätzlich zugeführt wird.

2. Fleischwolf nach Anspruch 1, **dadurch gekennzeichnet, dass** der Fleischwolf ein Förderwerk (9) umfasst oder mit einem Förderwerk (9) verbindbar ist, das den Fleischwolf mit zu zerkleinernden Lebensmitteln beschickt.

3. Fleischwolf nach Anspruch 1 oder 2, **dadurch gekennzeichnet, dass** die Einrichtung (6, 19, 40) zum Bestimmen der Separiergutmenge eine Fördereinrichtung (6) umfasst, die am Auslass (14) oder in einer Abführleitung (15) der Separiereinrichtung (5) angeordnet ist.

4. Fleischwolf nach Anspruch 3, **dadurch gekennzeichnet, dass** die Fördereinrichtung (6) motorisch antreibbar ist, wobei die Fördermenge der Fördereinrichtung (6) der von der Separiereinrichtung abgeführten Separiergutmenge entspricht.

5. Fleischwolf nach Anspruch 4, **dadurch gekennzeichnet, dass** die Fördermenge der Fördereinrichtung (6) abhängig vom Durchsatz des Fleischwolfs (1) oder in Abhängigkeit des Durchsatzes des Förderwerks (9) einstellbar ist.

6. Fleischwolf nach Anspruch 5, **dadurch gekennzeichnet, dass** der Antrieb der Fördereinrichtung (6) mit dem Antrieb des Förderwerks (9) gekoppelt ist oder dass die Antriebe getrennt sind.

7. Fleischwolf nach Anspruch 6, **dadurch gekennzeichnet, dass** die Antriebe über ein Getriebe gekoppelt sind.

8. Fleischwolf nach Anspruch 3, **dadurch gekennzeichnet, dass** die Fördereinrichtung (6) durch den Druck und die Bewegung des abgeführten Separiergutes angetrieben wird.

9. Fleischwolf nach Anspruch 8, **dadurch gekennzeichnet, dass** eine Messeinrichtung (40) vorgesehen ist, die über den Antrieb der Fördereinrichtung (6) die Fördermenge bestimmt.

10. Fleischwolf nach Anspruch 1 oder 2, **dadurch gekennzeichnet, dass** die Einrichtung (6, 19, 40) zum Bestimmen der von der Separiereinrichtung (5) abgeführten Separiergutmenge einen Durchflussmesser umfasst.

11. Fleischwolf nach einem der Ansprüche 1 oder 2, **dadurch gekennzeichnet, dass** die Einrichtung (6, 19, 40) zum Bestimmen der von der Separiereinrichtung (5) abgeführten Separiergutmenge ein kontinuierlich arbeitendes Wägesystem umfasst.

12. Fleischwolf nach mindestens einem der Ansprüche 8 bis 11, **dadurch gekennzeichnet, dass** die Fördereinrichtung (6) eine gesteuerte Bremse umfasst.

13. Fleischwolf nach mindestens einem der Ansprüche 4 oder 12, **dadurch gekennzeichnet, dass** die Einrichtung (6, 19, 40) eine Steuereinrichtung (19) umfasst, die die Fördereinrichtung (6) oder die gesteuerte Bremse ansteuert, um in Abhängigkeit der Güte der zu zerkleinernden Lebensmittel eine festgelegte Separiergutmenge gesteuert abzuführen.

14. Fleischwolf nach Anspruch 3, **dadurch gekennzeichnet, dass** die Fördereinrichtung (6) eine Pumpe ist.

15. Fleischwolf nach Anspruch 1, **dadurch gekennzeichnet, dass** die Einrichtung (6) zum Bestimmen der abgeführten Separiergutmenge das Volumen der abgeführten Separiergutmenge bestimmt.

16. Fleischwolf nach mindestens einem der Ansprüche 4 oder 12, **dadurch gekennzeichnet, dass** der Fleischwolf weiter mindestens einen Sensor (31) umfasst, der in Abhängigkeit der Zusammensetzung des Separierguts oder des zerkleinerten Lebensmittels ein Signal an eine Steuereinrichtung (19) ausgibt.

17. Fleischwolf nach Anspruch 16, **dadurch gekennzeichnet, dass** die Steuereinrichtung (19) die Fördereinrichtung (6) oder die gesteuerte Bremse in Abhängigkeit des Signals ansteuert.

18. Fleischwolf nach Anspruch 16 oder 17, **dadurch gekennzeichnet, dass** der Sensor ein Farbsensor ist, der insbesondere den Rot- bzw. Weißanteil des Separierguts oder des zerkleinerten Lebensmittels bestimmt.

19. Fleischwolf nach einem der Ansprüche 16 oder 18, **dadurch gekennzeichnet, dass** der mindestens eine Sensor (31) am Auslauf der Separiereinrichtung (5) und/oder am Auslauf des Fleischwolfs (1) und/oder im Bereich der Separiereinrichtung (5) angeordnet ist.

20. Fleischwolf nach Anspruch 1 und 2, **dadurch gekennzeichnet, dass** die Steuereinrichtung (19) derart das Förderwerk (9) ansteuert, dass die Förderleistung so erhöht wird, dass die bestimmte Menge des abgeführten Separierguts kompensiert wird.

21. Verfahren zum Erzeugen von zerkleinerten Lebensmitteln, insbesondere von Hackfleisch mit einem Fleischwolf nach Anspruch 1 mit folgenden Schritten:
Zuführen von grob zerkleinerten Lebensmitteln in den Einlass (2),
wobei das Lebensmittel gegen das mindestens eine Schneidemesser (3) gedrückt und zerschnitten wird,
Separieren und Abführen von Hartbestandteilen,
Pressen der zerschnittenen Lebensmittel durch die mindestens eine Lochscheibe (4),
Bestimmen der von der Separiereinrichtung (5) abgeführten Separiergutmenge,
**dadurch gekennzeichnet, dass** in Abhängigkeit der bestimmten abgeführten Menge an Separiergut den Portionen zusätzlich ein entsprechendes Volumen an zerkleinerten Lebensmitteln zugeführt wird.

22. Verfahren nach Anspruch 21 **dadurch gekennzeichnet, dass** das Volumen der abgeführten Separiergutmenge bestimmt wird.

23. Verfahren nach Anspruch 21 oder 22, **dadurch gekennzeichnet, dass** die abgeführte Menge an Separiergut in Form des Volumens oder der Masse bestimmt wird und/oder der zeitliche Verlauf der abgeführten Separiergutmenge .

24. Verfahren nach mindestens einem der Ansprüche 21 bis 23, **dadurch gekennzeichnet, dass** die abgeführte Separiergutmenge kontinuierlich während des Verfahrens bestimmt wird.

25. Verfahren nach mindestens einem der Ansprüche 21 bis 24, **dadurch gekennzeichnet, dass** am Auslass oder der Abführleitung der Separiereinrichtung (6) eine Fördereinrichtung (6) angeordnet ist, die motorisch angetrieben wird und deren Fördermenge vorab bestimmt und eingestellt wird.

26. Verfahren nach Anspruch 25, **dadurch gekennzeichnet, dass** die Fördermenge der Fördereinrichtung (6) in Abhängigkeit der Fördermenge eines am Einlass des Fleischwolfs angeordneten Förderwerks (9) bestimmt und eingestellt wird.

27. Verfahren nach mindestens einem der Ansprüche 21 bis 26, **dadurch gekennzeichnet, dass** eine nach der Separiereinrichtung (6) angeordnete Fördereinrichtung (6) durch den Druck oder durch die Bewegung des abgeführten Separierguts angetrieben wird.

28. Verfahren nach Anspruch 27, **dadurch gekennzeichnet, dass** mittels Messeinrichtung die Separiergutmenge bestimmt wird.

29. Verfahren nach mindestens einem der Ansprüche 21 bis 28, **dadurch gekennzeichnet, dass** der Durchfluss der abgeführten Separiergutmenge in einer Abführleitung nach der Separiereinrichtung bestimmt wird.

30. Verfahren nach mindestens einem der Ansprüche 27 bis 29, **dadurch gekennzeichnet, dass** die Separiergutmenge durch eine gesteuerte Bremse der Fördereinrichtung (6) eingestellt wird.

31. Verfahren nach mindestens einem der Ansprüche 21 bis 30, **dadurch gekennzeichnet, dass** die Zusammensetzung des Separierguts oder des zerkleinerten Lebensmittels über einen Sensor (31), vorzugsweise Farbsensor, bestimmt wird.

32. Verfahren nach Anspruch 31, **dadurch gekennzeichnet, dass** die von der Separiereinrichtung abgeführte Menge in Abhängigkeit des Sensorsignals eingestellt wird.

33. Verfahren nach mindestens einem der Ansprüche 21 bis 32, **dadurch gekennzeichnet, dass** ein Förderwerk (9), das den Fleischwolf beschickt, derart angesteuert wird, dass die Förderleistung derart erhöht wird, dass die bestimmte Menge an Separiergut kompensiert wird.

34. Verfahren nach mindestens einem der Ansprüche 21 bis 33, **dadurch gekennzeichnet, dass** die Fördermenge der Fördereinrichtung (6) in Abhängigkeit der Güte der zu zerkleinernden Lebensmittel festgelegt wird, so dass das Separiergut gesteuert abgeführt wird.

## Claims

1. Meat mincing machine (1) for producing minced foodstuffs, in particular minced meat, with an inlet (2), at least one blade (3) and at least one following perforated disc (4), as well as with a separating device (5) for separating and drawing off hard constituents with
a device (6, 19, 40) for determining the amount of separated product drawn off by the separating device (5), **characterised in that**
the meat mincing machine (1) moreover comprises a control device (19) which causes at least a corresponding amount of minced foodstuff to be fed additionally to the portions to be produced in dependence of the determined amount drawn off by the separating device.

2. Meat mincing machine according to Claim 1, **characterised in that** the meat mincing machine comprises a conveying mechanism (9) or can be connected to a conveying mechanism (9) which charges the meat mincing machine with foodstuffs to be minced.

3. Meat mincing machine according to Claim 1 or 2, **characterised in that** the device (6, 19, 40) for determining the amount of separated product comprises a conveying device (6), which is arranged at the outlet (14) or in a discharge pipe (15) of the separating device (5).

4. Meat mincing machine according to Claim 3, **characterised in that** the conveying device (6) can be driven by a motor, wherein the amount conveyed by the conveying device (6) corresponds to the amount of product separated and drawn off by the separating device.

5. Meat mincing machine according to Claim 4, **characterised in that** the amount conveyed by the conveying device (6) depends on the throughput of the meat mincing machine (1) or can be set in dependence of the throughput of the conveying mechanism (9).

6. Meat mincing machine according to Claim 5, **characterised in that** the drive of the conveying device (6) is coupled to the drive of the conveying mechanism (9) or that the drives are separate.

7. Meat mincing machine according to Claim 6, **characterised in that** the drives are coupled via a gear train.

8. Meat mincing machine according to Claim 3, **characterised in that** the conveying device (6) is driven by the pressure and the movement of the drawn-off separated product.

9. Meat mincing machine according to Claim 8, **characterised in that** a measurement device (40) is provided which determines the conveyed amount via the drive of the conveying device (6).

10. Meat mincing machine according to Claim 1 or 2, **characterised in that** the device (6, 19, 40) for the determination of the amount of product separated and drawn off by the separating device (5) comprises a flowmeter.

11. Meat mincing machine according to one of the Claims 1 or 2, **characterised in that** the device (6, 19, 40) for the determination of the amount of product separated and drawn off by the separating device (5) comprises a continuously operating weighing system.

12. Meat mincing machine according to at least one of the Claims 8 to 11, **characterised in that** the conveying device (6) comprises a controlled brake.

13. Meat mincing machine according to at least one of the Claims 4 or 12, **characterised in that** the device (6, 19, 40) comprises a control device (19), which controls the conveying device (6) or the controlled brake to draw off in a controlled manner a defined amount of separated product in dependence of the quality of the foodstuff to be minced.

14. Meat mincing machine according to Claim 3, **characterised in that** the conveying device (6) is a pump.

15. Meat mincing machine according to Claim 1, **characterised in that** the device (6) for the determination of the amount of separated product to be drawn off determines the volume of the drawn-off amount of separated product.

16. Meat mincing machine according to at least one of the Claims 4 or 12, **characterised in that** the meat mincing machine moreover comprises at least one sensor (31), which outputs a signal to a control device (19) in dependence of the composition of the separated product or minced foodstuff.

17. Meat mincing machine according to Claim 16, **characterised in that** the control device (19) controls the conveying device (6) or the controlled brake in dependence of the signal.

18. Meat mincing machine according to Claim 16 or 17, **characterised in that** the sensor is a colour sensor which in particular determines the red or white proportion of the separated product or minced foodstuff.

19. Meat mincing machine according to one of the Claims 16 or 18, **characterised in that** the at least one sensor (31) is arranged at the outlet of the separating device (5) and / or at the outlet of the meat mincing machine (1) and / or in the region of the separating device (5).

20. Meat mincing machine according to Claims 1 and 2, **characterised in that** the control device (19) controls the conveying mechanism (9) such that the conveying rate is increased such that the determined amount of the drawn-off separated product is compensated.

21. Method of producing minced foodstuff, in particular minced meat with a meat mincing machine according to Claim 1 with the following steps:
feeding of coarsely chopped foodstuff to the inlet (2),
wherein the foodstuff is pressed against the at least one blade (3) and minced,
separation and drawing off of hard constituents,
pressing of the minced foodstuff through the at least one perforated disc (4),
determination of the amount of product separated and drawn off by the separating device (5),
**characterised in that** a corresponding volume of minced foodstuff is additionally fed to the portions in dependence of the determined drawn-off amount of separated product.

22. Method according to Claim 21, **characterised in that** the volume of the drawn-off amount of separated product is determined.

23. Method according to Claim 21 or 22, **characterised in that** the drawn-off amount of separated product is determined in the form of the volume or the mass and / or the temporal progression of the drawn-off amount of separated product.

24. Method according to at least one of the Claims 21 to 23, **characterised in that** the drawn-off amount of separated product is continuously determined during the process.

25. Method according to at least one of the Claims 21 to 24, **characterised in that** a conveying device (6), which is driven by a motor and the conveyed amount of which is previously determined and set, is arranged on the outlet or the discharge pipe of the separating device (5).

26. Method according to Claim 25, **characterised in that** the amount conveyed by the conveying device (6) is determined and set in dependence of the conveyed amount of a conveying mechanism (9) arranged at the inlet of the meat mincing machine.

27. Method according to at least one of the Claims 21 to 26, **characterised in that** a conveying device (6) arranged after the separating device (5) is driven by the pressure or by the movement of the drawn-off separated product.

28. Method according to Claim 27, **characterised in that** the amount of separated product is determined by means of a measurement device.

29. Method according to at least one of the Claims 21 to 28, **characterised in that** the flow rate of the drawn-off amount of separated product is determined in a discharge pipe after the separating device.

30. Method according to at least one of the Claims 27 to 29, **characterised in that** the amount of separated product is set by a controlled brake of the conveying device (6).

31. Method according to at least one of the Claims 21 to 30, **characterised in that** the composition of the separated product or of the minced foodstuff is determined using a sensor (31), preferably a colour sensor.

32. Method according to Claim 31, **characterised in that** the amount separated and drawn off by the separating device is set in dependence of the sensor signal.

33. Method according to at least one of the Claims 21 to 32, **characterised in that** a conveying mechanism (9), which charges the meat mincing machine, is controlled such that the conveying rate is increased such that the determined amount of separated product is compensated.

34. Method according to at least one of the Claims 21 to 33, **characterised in that** the amount conveyed by the conveying device (6) is defined in dependence of the quality of the foodstuff to be minced so that the separated product is drawn off in a controlled manner.

## Revendications

1. Hachoir à viande (1) pour produire des denrées alimentaires réduites en petits morceaux, en particulier de la viande hachée, avec une admission (2), au moins un couteau à découper (3) et au moins un disque perforé aval (4), ainsi qu'avec un dispositif de séparation (5) pour la séparation et l'évacuation de constituants durs, avec un dispositif (6, 19, 40) pour déterminer la quantité de produit séparé évacué par le dispositif de séparation (5), **caractérisé en ce que** le hachoir à viande (1) comprend en outre un dispositif de commande (19) qui fait que, en fonction de la quantité évacuée déterminée par le dispositif de séparation, au moins une quantité correspondante de denrées alimentaires réduites en petits morceaux est envoyée en supplément aux portions à produire.

2. Hachoir à viande suivant la revendication 1, **caractérisé en ce que** le hachoir à viande comprend un dispositif d'avancement (9) ou est raccordable à un dispositif d'avancement (9), qui charge le hachoir à viande en denrées alimentaires à réduire en petits morceaux.

3. Hachoir à viande suivant l'une des revendications 1 et 2, **caractérisé en ce que** le dispositif (6, 19, 40) pour la détermination de la quantité de produit séparé comprend un dispositif de refoulement (6), qui est disposé à la sortie (14) ou dans une conduite d'évacuation (15) du dispositif de séparation (5).

4. Hachoir à viande suivant la revendication 3, **caractérisé en ce que** le dispositif de refoulement (6) est entraînable par moteur, la quantité refoulée par le dispositif (6) correspondant à la quantité de produit séparé évacuée par le dispositif de séparation.

5. Hachoir à viande suivant la revendication 4, **caractérisé en ce que** la quantité refoulée par le dispositif de refoulement (6) est réglable en fonction du débit du hachoir à viande (1) ou en fonction du débit du dispositif d'avancement (9).

6. Hachoir à viande suivant la revendication 5, **caractérisé en ce que** l'entraînement du dispositif de refoulement (6) est couplé à l'entraînement du dispositif d'avancement (9) ou que les entraînements sont séparés.

7. Hachoir à viande suivant la revendication 6, **caractérisé en ce que** les entraînements sont couplés par l'intermédiaire d'une transmission.

8. Hachoir à viande suivant la revendication 3, **caractérisé en ce que** le dispositif de refoulement (6) est entraîné par la pression et par le déplacement du produit séparé évacué.

9. Hachoir à viande suivant la revendication 8, **caractérisé en ce qu'**il est prévu un dispositif de mesure (40), qui détermine la quantité refoulée par l'intermédiaire de l'entraînement du dispositif de refoulement (6).

10. Hachoir à viande suivant l'une des revendications 1 et 2, **caractérisé en ce que** le dispositif (6, 19, 40) pour la détermination de la quantité de produit séparé évacuée par le dispositif de séparation (5) comprend un débitmètre.

11. Hachoir à viande suivant l'une des revendications 1 et 2, **caractérisé en ce que** le dispositif (6, 19, 40) pour la détermination de la quantité de produit séparé évacué par le dispositif de séparation (5) comprend un système de pesée fonctionnant en continu.

12. Hachoir à viande suivant l'une au moins des revendications 8 à 11, **caractérisé en ce que** le dispositif de refoulement (6) comprend un frein contrôlé.

13. Hachoir à viande suivant l'une au moins des revendications 4 et 12, **caractérisé en ce que** le dispositif (6, 19, 40) comprend un dispositif de commande (19), qui commande le dispositif de refoulement (6) ou le frein contrôlé pour évacuer sous contrôle une quantité de produit séparé définie en fonction de la qualité des denrées alimentaires à réduire en petits morceaux.

14. Hachoir à viande suivant la revendication 3, **caractérisé en ce que** le dispositif de refoulement (6) est une pompe.

15. Hachoir à viande suivant la revendication 1, **caractérisé en ce que** le dispositif (6) pour la détermination de la quantité de produit séparé évacuée détermine le volume de la quantité de produit séparé évacuée.

16. Hachoir à viande suivant l'une au moins des revendications 4 et 12, **caractérisé en ce que** le hachoir à viande comprend en outre au moins un détecteur (31), qui transmet un signal à un dispositif de commande (19) en fonction de la composition du produit séparé ou de la denrée alimentaire réduite en petits morceaux.

17. Hachoir à viande suivant la revendication 16, **caractérisé en ce que** le dispositif de commande (19) commande le dispositif de refoulement (6) ou le frein contrôlé en fonction du signal.

18. Hachoir à viande suivant l'une des revendications 16 et 17, **caractérisé en ce que** le détecteur est un détecteur de couleur, qui détermine en particulier la part de rouge ou de blanc du produit séparé ou de la denrée alimentaire réduite en petits morceaux.

19. Hachoir à viande suivant l'une au moins des revendications 16 et 18, **caractérisé en ce que** le au moins un détecteur (31) est disposé à la sortie du dispositif de séparation (5) et/ou à la sortie du hachoir à viande (1) et/ou dans la zone du dispositif de séparation (5).

20. Hachoir à viande suivant les revendications 1 et 2, **caractérisé en ce que** le dispositif de commande (19) commande le dispositif d'avancement (9) de telle sorte que le débit est accru de sorte que la quantité déterminée du produit séparé évacué est compensée.

21. Procédé de production de denrées alimentaires réduites en petits morceaux, an particulier de viande hachée, avec un hachoir à viande suivant la revendication 1, comprenant les étapes suivantes .
- arrivée de denrées alimentaires réduites grossièrement en petits morceaux dans l'admission (2),
- la denrée alimentaire étant alors pressée contre le au moins un couteau à découper et coupée en morceaux,
- séparation et évacuation des constituants durs,
- pressage des denrées alimentaires découpées au travers du au moins un disque perforé (4),
- détermination de la quantité de produit séparé évacuée par le dispositif de séparation (5),
**caractérisé en ce qu'**un volume correspondant de denrées alimentaires réduites en petits morceaux est envoyé en supplément dans les portions en fonction de la quantité évacuée déterminée de produit séparé.

22. Procédé suivant la revendication 21, **caractérisé en ce que** le volume de la quantité de produit séparé évacuée est déterminé.

23. Procédé suivant l'une des revendications 21 et 22, **caractérisé en ce que** la quantité évacuée de produit séparé est déterminée en forme du volume ou de la masse et/ou de l'allure dans le temps de la quantité de produit séparé évacuée.

24. Procédé suivant l'une au moins des revendications 21 à 23, **caractérisé en ce que** la quantité de produit séparé évacuée est déterminée en continu pendant le procédé.

25. Procédé suivant l'une au moins des revendications 21 à 24, **caractérisé en ce qu'**un dispositif de refoulement (6) est disposé à la sortie ou sur la conduite d'évacuation du dispositif de séparation (5), lequel dispositif de refoulement est motorisé et dont la quantité refoulée est déterminée et réglée au préalable.

26. Procédé suivant la revendication 25, **caractérisé en ce que** la quantité refoulée par le dispositif de refoulement (6) est déterminée et réglée en fonction de la quantité refoulée par un dispositif d'avancement (9) disposé sur l'admission du hachoir à viande.

27. Procédé suivant l'une au moins des revendications 21 à 26, **caractérisé en ce qu'**un dispositif de refoulement (6), disposé en aval du dispositif de séparation (5), est entraîné par la pression ou par le déplacement du produit séparé évacué.

28. Procédé suivant la revendication 27, **caractérisé en ce que** la quantité de produit séparé est déterminée au moyen d'un dispositif de mesure.

29. Procédé suivant l'une au moins des revendications 21 à 28, **caractérisé en ce que** le débit de la quantité de produit séparé évacuée est déterminé dans une conduite d'évacuation en aval du dispositif de séparation.

30. Procédé suivant l'une au moins des revendications 27 à 29, **caractérisé en ce que** la quantité de produit séparé est réglée par un frein contrôlé du dispositif de refoulement (6).

31. Procédé suivant l'une au moins des revendications 21 à 30, **caractérisé en ce que** la composition du produit séparé ou de la denrée alimentaire réduite en petits morceaux est déterminée par l'intermédiaire d'un détecteur (31), de préférence un détecteur de couleur.

32. Procédé suivant la revendication 31, **caractérisé en ce que** la quantité évacuée par le dispositif de séparation est réglée en fonction du signal du détecteur.

33. Procédé suivant l'une au moins des revendications 21 à 32, **caractérisé en ce qu'**un dispositif d'avancement (9), qui charge le hachoir à viande, est commandé de telle sorte que le débit est accru de sorte que la quantité déterminée de produit séparé est compensée.

34. Procédé suivant l'une au moins des revendications 21 à 33, **caractérisé en ce que** la quantité refoulée par le dispositif de refoulement (6) est définie en fonction de la qualité des denrées alimentaires à réduire en petits morceaux, de sorte que le produit séparé est évacué sous contrôle.
